# EUROPÄISCHE PATENTSCHRIFT

(11) **EP 3 758 900 B1**
(45) Veröffentlichungstag und Bekanntmachung des Hinweises auf die Patenterteilung: **25.09.2024**
(21) Anmeldenummer: 18709515.3
(22) Anmeldetag: 01.03.2018
(51) Int. Cl.: B25J 15/00, B66C 1/02, B65G 47/91

(54) **ANLAGE ZUR BEARBEITUNG VON FLÄCHIGEN WERKSTÜCKEN**
INSTALLATION FOR PROCESSING FLAT WORKPIECES
INSTALLATION POUR LE TRAITEMENT DE PIÈCES PLATES

(43) Veröffentlichungstag der Anmeldung: 06.01.2021
(73) Patentinhaber: Güdel AG, 4900 Langenthal (CH)
(72) Erfinder: STAUFFER, Adrian, 4900 Langenthal (CH); GERBER, Markus, 3362 Niederönz (CH); MÜLLER, Lukas, 3604 Thun (CH)
(74) Vertreter: Keller Schneider Patent- und Markenanwälte AG
(86) Internationale Anmeldenummer: PCT/EP2018/055098
(87) Internationale Veröffentlichungsnummer: WO 2019/166097

(56) Entgegenhaltungen:
- DE-A1- 102006 017 763
- DE-B3- 102013 105 383
- US-A1- 2009 194 922
- US-A1- 2017 152 115

## Beschreibung

### Technisches Gebiet

ie Erfindung betrifft eine Anlage zur Bearbeitung von flächigen Werkstücken, umfassend eine Transportvorrichtung, wobei an der Transportvorrichtung ein Tooling befestigt ist und wobei das Tooling einen Grundkörper und mehrere am Grundkörper angeordnete Halteelemente umfasst. Die Halteelemente sind unabhängig voneinander relativ zum Grundkörper beweglich, wobei jedes der Halteelemente in einem Endbereich eines Arms befestigt ist. Die Anlage umfasst ausserdem eine vom Tooling separate Einstellvorrichtung zum Verschieben der Arme relativ zum Grundkörper des Toolings, wobei die Einstellvorrichtung
in einem Bereich der Anlage angeordnet ist, in welchen das Tooling mittels der Transportvorrichtung verfahrbar ist. Die Erfindung betrifft weiter ein Verfahren zur Bearbeitung von flächigen Werkstücken.

### Stand der Technik

In Anlagen zur automatisierten Bearbeitung von flächigen Werkstücken, wie z. B. Platinen aus Blech in einer Pressestrasse, werden zum Ergreifen, Halten und Freigeben von Werkstücken oft so genannte Toolings eingesetzt. Es handelt sich dabei um Greiforgane, welche mehrere Halteeinrichtungen aufweisen, die das flächige Werkstück gleichzeitig an mehreren Stellen I<ontal<tieren und selektiv festhalten können. Das Tooling ist an einer Transportvorrichtung gehalten und wird mittels dieser an vorgegebene Positionen und in vorgegebene Orientierungen bewegt, so dass das Werkstück transportiert und für Bearbeitungsoperationen positioniert werden kann.

Die Konfiguration des verwendeten Toolings, namentlich was die Anzahl und die Positionierung der Halteeinrichtungen betrifft, muss in der Regel an die zu transportierenden Werkstücke angepasst sein. Dazu können für unterschiedliche Werkstücke unterschiedliche Toolings zum Einsatz kommen, die beispielsweise mittels einer Schnellkupplungsvorrichtung an der Transportvorrichtung anbringbar sind, so dass sie bei Bedarf schnell ausgewechselt werden können. Statt für alle Werkstücke separate spezifische Toolings vorzusehen, können auch Toolings eingesetzt werden, welche umkonfigurierbar sind. Herkömmlich erfolgt die Umkonfigurierung manuell, eine Bedienperson verschiebt beispielsweise am Tooling angeordnete Haltevorrichtungen oder tauscht Teile des Toolings aus.

Die DE 10 2006 017763 A1 (SCHOTT AG) offenbart z. B. einen Dünnglasgreifer zum Halten und Transportieren von dünnen Gläsern, der mehrere Greiferarme mit mindestens je einem in einem Endbereich angeordneten Saugheber aufweist, wobei die Greiferarme über einen gemeinsamen Anschlussflansch an einen Roboter anschliessbar sind. Die Greiferarme umfassen ein Aussen- und ein Innenrohr, wobei das Innenrohr relativ zum Aussenrohr stufenlos teleskopierbar ist.

Im Rahmen einer möglichst vollständig automatisierten Fertigung ist es von Vorteil, wenn die Umkonfigurierung automatisch erfolgen kann. Entsprechende Toolings und Anlagen sind aus dem Stand der Technik bekannt.

So offenbart die DE 10 2013 105 383 B3 (Schindler Handhabetechnil< GmbH) eine Vorrichtung zum pneumatischen Halten und Heben von Glasplatten. Das entsprechende Tooling besitzt mindestens zwei teleskopartige Quertragball<en mit mindestens zwei Telesl<opgliedern, die mit einem Quertragball<enantrieb gegeneinander verschiebbar sind. An den Telesl<opgliedern der einzelnen Quertragball<en ist jeweils mindestens ein Sauger als Halteelement befestigt. So ist es mithilfe der Quertragball<enantriebe möglich, den jeweiligen Quertragball<en in seiner Länge zu verändern und gleichzeitig den Abstand der an diesem Quertragball<en befestigten Sauger zu ändern. Die Quertragball<enantriebe sind am Tooling angeordnet und können durch Linearmotoren gebildet sein. Bevorzugt sind sie durch jeweils einen Pneumatikzylinder und durch Übertragungsgetriebe an den einzelnen Telesl<opgliedern gebildet.

Das entsprechende Tooling mit den teleskopartigen Quertragball<en und den entsprechenden Quertragball<enantrieben ist relativ komplex aufgebaut und weist ein entsprechend hohes Gewicht auf. Dies führt im Vergleich mit spezifisch zusammengestellten Toolings im Betrieb zu höheren Kräften und/oder zu einer verschlechterten Dynamik. Beim Handling von relativ schweren Glasplatten fällt dies nicht zwingend ins Gewicht, falls leichtere Werkstücke bearbeitet werden sollen, ist aber ein schweres Tooling von Nachteil.

Die US 2017/152115 A1 (Nil<e) betrifft Greifer mit selektiv aktivierbaren Aufnahmebereichen zum Transportieren von Artikeln, z. B. Schuhen oder Bekleidung, in einer Herstellungsanlage. Die Greifer umfassen mehrere Düsen die in eine aktive bzw. eine passive Position verfahren werden können. Dazu sind düsenspezifische Bewegungseinrichtungen vorhanden, welche mit Hilfe von Pneumatikzylindern realisiert sein können.

Die US 2009/194922 A1 (GM) beschreibt wiederum ein automatisch I<onfigurierbares Tooling für einen Roboterarm. Es umfasst ein gitterartiges Grundgestell mit parallelen linearen Führungen. An diesen sind Halteelemente verschieblich gelagert, welche jeweils zwei Rotationsachsen und eine dazwischenliegende lineare Achse aufweisen. Die Einstellung der einzelnen Freiheitsgrade der Halteelemente erfolgt mit Hilfe einer Endeffel<torvorrichtung, die selektiv mit Betätigungselementen der Halteeinrichtung zusammenwirken kann.

Die DE 10 2014 107 533 B4 (GM Global Technology Operations LLC) betrifft eine umkonfigurierbare Greiforgananordnung mit einem Hauptholm, einem Glied, das in Bezug auf den Hauptholm rechtwinklig angeordnet ist und das mit einem Ende des Hauptholms starr verbunden ist, mit einer Vielzahl von Zweigen, die sich von dem Glied aus radial nach aussen erstrecken, sowie einer Vielzahl von Tandem-Zweigverbindungsanordnungen, die jeweils mindestens zwei der Zweige mit dem Glied verbinden. Die Tandem-Zweigverbindungsanordnungen umfassen erste und zweite Zweigverbindungen, wovon jede einen lösbaren Haltenocken umfasst. Werkzeugmodule sind jeweils an einem entsprechenden der Zweige montiert und mit Bezug dazu selektiv verschiebbar und drehbar. Die Tandem-Zweigverbindungsanordnungen sind mit Bezug auf eine Längsachse des Glieds jeweils dreh- und verschiebbar, wenn der Haltenocken gelöst ist. So kann die Konfiguration der Greiforgananordnung an die Konstruktion eines zu ergreifenden Werkstücks angepasst werden. Aktoren zum Lösen der Haltenocken können Teil eines I<onfigurationswerl<zeugs sein, welches von einem Roboter in eine Wechselwirl<ungsposition mit einem gegebenen Haltenocken bewegt wird.

Durch die Anordnung der Aktoren getrennt vom Tooling lässt sich letzteres leichter ausbilden, was Kräfte auf eine Transportvorrichtung für das Tooling verringert und/oder eine höhere Dynamik ermöglicht. Die Konfiguration dieses Toolings mit den Zweigen und den dreh- und verschiebbaren Tandem-Zweigverbindungsanordnungen ist allerdings relativ komplex und erfordert zum Positionieren des I<onfigurationswerl<zeugs einen Roboter mit einigen Freiheitsgraden. Zur Umkonfiguration des Toolings muss das Konfigurationswerkzeug nacheinander zu allen Haltenocken bewegt werden, was einige Zeit in Anspruch nimmt.

### Darstellung der Erfindung

Aufgabe der Erfindung ist es, eine dem eingangs genannten technischen Gebiet zugehörende Anlage mit einem Tooling zu schaffen, welches einfach und schnell automatisch I<onfigurierbar ist und ein geringes Gewicht aufweist.

Die Lösung der Aufgabe ist durch die Merkmale des Anspruchs 1 definiert. Gemäss der Erfindung umfasst die Einstellvorrichtung mehrere linear verschiebliche Elemente, wobei das Tooling relativ zur Einstellvorrichtung so positionierbar ist, dass die linear verschieblichen Elemente gleichzeitig mit mehreren der Arme zu deren Verschiebung entlang des Verschiebewegs zusammenwirken können.

Bei der Bearbeitung der Werkstücke kann es sich um ein Umformen, ein Beschneiden oder Stanzen, um eine materialabtragende Bearbeitung, eine Beschichtung oder Lackierung, einen reinen Transportvorgang, eine Kombination solcher Schritte oder um andersartige Aktionen handeln, für welche die Werkstücke ergriffen und gehalten werden müssen.

Die Befestigung des Toolings an der Transportvorrichtung kann auf unterschiedliche Weise erfolgen. So kann eine Schnellkupplungsvorrichtung vorhanden sein, so dass das Tooling einfach und schnell ausgewechselt werden kann. Weil der Wechsel aufgrund der Uml<onfigurierbarl<eit selten notwendig sein dürfte, kann das Tooling auch über eine übliche Verschraubung oder eine andere Verbindung an der Transportvorrichtung angebracht werden. Sogar eine feste Anordnung, z. B. über eine Verschweissung, oder eine einstückige Ausführung des Toolings (oder von Teilen davon) mit der Transportvorrichtung (oder Teilen davon), ist denkbar.

Die Einstellvorrichtung ist vom Tooling separat angeordnet, d. h. im Betrieb der Anlage zur Bearbeitung von flächigen Werkstücken wird das Tooling ohne die Einstellvorrichtung bewegt. Die Einstellvorrichtung ist insbesondere stationär in der Anlage angeordnet.

Die Arme des Toolings sind relativ zum Grundkörper entlang eines linearen Verschiebewegs in einer Längsausdehnung des jeweiligen Arms, passiv verschiebbar, und das Tooling umfasst für jeden der Arme eine Fixiervorrichtung, mittels welcher eine Position des jeweiligen Arms entlang des Verschiebewegs feststellbar ist.

Die Verschiebung der Arme ist somit möglich, wenn die einem Arm zugeordnete Fixiervorrichtung gelöst ist. Es ist dazu kein auf dem Tooling angeordneter Antrieb notwendig, sondern der jeweilige Arm ist passiv und kann durch von aussen einwirkende entsprechende Verschiebekräfte relativ zum Grundkörper bewegt werden. Das Feststellen des Arms kann durch form- und/oder kraftschlüssige Mittel erfolgen. Der Arm ist dann festgestellt (oder fixiert), wenn sich seine Position relativ zum Grundkörper bei den im Betrieb maximal erwarteten auf ihn einwirkenden Kräften nicht ändert.

Die Fixiervorrichtungen für die einzelnen Arme können einzeln, nur gemeinsam oder in Gruppen betätigbar sein. Dazu können mehrere Fixiervorrichtungen mechanisch, pneumatisch, hydraulisch oder elektrisch miteinander gekoppelt sein. Auch eine einstückige Ausbildung mehrerer (oder aller) Fixiervorrichtungen ist möglich.

Die Befestigung eines Halteelements an einem Endbereich eines entsprechenden Arms kann stirnseitig am Arm, d. h. am freien Ende selbst, erfolgen. Sie kann aber auch seitlich am Arm erfolgen. Der Endbereich des Arms grenzt an das freie Ende des Arms an, welches entlang des Verschiebewegs bei ausgefahrenem Arm vom Grundkörper abgewandt ist. Die Positionierung im Endbereich ist so gewählt, dass bei einer Bewegung entlang des Verschiebewegs, von einer Endposition zur anderen, mindestens der benötigte Verstellweg des Halteelements erreicht wird. Um eine schmale Bauweise des Toolings in Querrichtung zu ermöglichen, beträgt die Ausdehnung des Endbereichs entlang des Verschiebewegs bevorzugt maximal 20 % der Distanz des freien Endes des Arms zur zugewandten Seite des Grundkörpers bei komplett ausgefahrenem Arm.

Beim Arm handelt es sich insbesondere um ein langgestrecktes, gerades Element mit gleichbleibendem Querschnitt. Der Querschnitt kann regelmässig polygonal sein, es sind aber auch ein runder Querschnitt oder eine unregelmässige Querschnittsform möglich.

Aufgrund seines passiven Charakters ist das Tooling leicht und kann kostengünstig hergestellt werden. Verglichen mit fix I<onfigurierten Toolings ergeben sich aufgrund der Konfigurierbarkeit reduzierte Kosten, weil nicht verschiedene Toolings vorgehalten und bereitgestellt werden müssen. Die Lagerfläche für Austauschtoolings wird eingespart, auch eine automatische Tooling-Wechselstation oder ein manueller Toolings-Wechsel erübrigen sich. Wegen der erfindungsgemässen Geometrie lässt sich das Tooling auf einfache Weise einstellen, es sind keine komplexen Bewegungen und entsprechend keine aufwendigen Einstelleinrichtungen (wie z. B. mehrachsige Roboter) notwendig. Bevorzugt umfasst die Einstellvorrichtung pro Arm des Toolings ein linear verschiebliches Element, so dass die Uml<onfiguration des Toolings in einem Schritt, für alle Arme gleichzeitig, erfolgen kann. Auch in diesem Fall können Toolings mit dieser Einstellvorrichtung zusammenwirken, welche weniger Arme aufweisen - so dass zum Umkonfigurieren nicht alle verschieblichen Elemente benötigt werden - als auch Toolings, welche mehr Arme aufweisen - in diesem Fall sind mehrere Einstellschritte notwendig, wobei die Relativposition zwischen Tooling und Einstellvorrichtung zwischen den Schritten verändert wird. Diese Veränderung kann durch die Bewegung der Einstellvorrichtung, des Toolings oder beider Elemente erfolgen. Bevorzugt ist die Veränderung durch eine Bewegung des Toolings, da die Transportvorrichtung, an welcher das Tooling gelagert ist, in der Regel die benötigte Relativbewegung ohne weiteres ermöglicht.

Besonders bevorzugt sind Ausführungsformen, bei welchen sich die Arme parallel zueinander in derselben Ebene erstrecken. Die linear verschieblichen Elemente werden dann ebenfalls entlang von parallel zueinander in derselben Ebene verlaufenden Pfaden bewegt. Entsprechend kann die Einstellvorrichtung konstruktiv einfach ausgeführt werden.

Mit Vorteil umfasst die Anlage eine Bereitstellungseinheit für die flächigen Werkstücke, wobei die Einstellvorrichtung in die Bereitstellungseinheit integriert ist. Wie nachfolgend ausgeführt wird, bietet diese Integration einige Vorteile. Jedenfalls kann das Tooling mittels der Transportvorrichtung zur Bereitstellungseinheit für die Werkstücke verfahren werden. Durch die Kombination von Bereitstellungseinheit und Einstellvorrichtung ergibt sich somit ein reduzierter Platzbedarf.

Die Bereitstellungseinheit umfasst beispielsweise einen Bereitstellungsplatz, in welchem die zu verarbeitenden Werkstücke zur Aufnahme durch das Tooling bereitgestellt werden, beispielsweise als Stapel. Die Bereitstellungseinheit kann zudem Führungen oder Aufnahmen für die Werkstücke umfassen, Einrichtungen, welche das Ergreifen der Werkstücke vereinfachen, Detektoren für die Werkstückposition usw.

Bevorzugt umfassen die Elemente Vorrichtungen zum Aufspreizen von bereitzustellenden Werkstücken. Die Elemente sind somit Teil eines so genannten "Fanners". Sowohl zur Umkonfiguration des Toolings als auch für das Aufspreizen müssen die Elemente in an die Werkstückkontur angepasste Positionen bewegt werden, so dass i. W. dieselben Freiheitsgrade für beide Zwecke genutzt werden können. Durch die Mehrfachfunktion wird der konstruktive Aufwand für die erfindungsgemässe Anlage reduziert.

Besonders bevorzugt handelt es sich bei diesen Vorrichtungen um Magnetköpfe. Diese sind zum Aufspreizen von gestapelten metallischen Werkstücken geeignet. Alternativ oder zusätzlich weisen die Vorrichtungen Auslässe für Druckluft auf. So lassen sich auch nichtmetallische (bzw. nicht-ferromagnetische) Werkstücke aufspreizen.

Bei den Halteelementen handelt es sich insbesondere um Vakuumsauger. Diese sind zum Halten von flächigen Werkstücken gut geeignet und die Haltekraft lässt sich pneumatisch selektiv regeln bzw. ein- oder ausschalten. Alternativ oder zusätzlich wird die Erfindung mit magnetischen und/oder mechanischen Halteelementen umgesetzt.

Bevorzugt ist der Grundkörper durch einen Tragebalken gebildet, wobei die Arme verschiebbar am Tragebalken gelagert sind. Entlang des Trageball<ens sind somit mehrere Arme angeordnet, die mit den daran angeordneten Halteelementen den Haltebereich des Toolings definieren. Die Lagerung der Halteelemente kann in durchgehenden Öffnungen im Tragebalken erfolgen, es sind auch seitlich am Tragebalken angeordnete Lagerbuchsen möglich. Solche Lagerbuchsen können sich teilweise in Ausnehmungen im Tragebalken erstrecken.

Mit Vorteil sind die Arme in am Grundkörper angeordneten Gleitlagern geführt. Diese ermöglichen eine präzise und stabile Lagerung, sind einfach und robust aufgebaut sowie wartungsarm.

Alternativ sind auch Wälzlager oder Mischformen aus Gleit- und Wälzlagern möglich.

Mit Vorteil spannen die Arme und der Tragebalken eine gemeinsame Ebene auf, wobei sowohl eine einseitige als auch eine beidseitige Anordnung der Arme möglich ist. Die beidseitige Anordnung ist dabei bevorzugt, weil sie einen besseren Momentenausgleich in Bezug auf die auf den Tragebalken wirkenden Kräfte zur Folge hat. Die entsprechende Geometrie ist dem flächigen Charakter der zu bearbeitenden Werkstücke angepasst und ermöglicht eine flexible Verwendung des Toolings.

Mit Vorteil sind die linearen Verschiebewege der Arme parallel zueinander, d. h. die Arme sind parallel zueinander am Tragebalken angeordnet. Aufgrund dieser Anordnung ist die Umkonfiguration des Toolings vereinfacht, weil die Verschiebung der Halteelemente parallel zueinander erfolgen kann und somit auch die für die Verschiebung benötigten Kräfte alle entlang paralleler Wirkungslinien einwirken.

Bevorzugt ist der lineare Verschiebeweg aller Arme senkrecht zu einer Längsausdehnung des Trageball<ens orientiert, wobei die Arme mit ihrer Längsausdehnung den Tragebalken kreuzen. Dies ermöglicht eine einfache und kompakte Ausbildung des Toolings. Wenn die Halteelemente bezüglich des Trageball<ens eingefahren werden, nimmt die Länge des sich auf die Gegenseite des Trageball<ens erstreckenden Abschnitts des entsprechenden Arms zu, wobei das Halteelement grundsätzlich bis zum Tragebalken hin (oder bis in dessen unmittelbare Nähe) verfahrbar ist.

Mit Vorteil sind die Fixiervorrichtungen durch Klemmeinheiten gebildet. Diese sind entweder am Grundkörper angeordnet und üben eine steuerbare bzw. al<tivierbare und deaktivierbare Klemmkraft auf die Arme aus, oder sie sind an den Armen angeordnet und üben eine steuerbare bzw. al<tivierbare und deaktivierbare Klemmkraft auf den Grundkörper aus. Die Steuerung der Klemmeinheiten kann durch lokale Elemente (z. B. elektrisch schaltbare Ventile oder Servomotoren), gruppenweise oder zentral auf dem Grundkörper oder ausserhalb des Toolings erfolgen. Da das Lösen und die Fixierung nur bei der Umkonfiguration des Toolings erfolgen, werden keine schnellen Schaltzeiten benötigt.

Klemmeinheiten ermöglichen eine Fixierung der Arme an einer beliebigen Verschiebeposition.

Mit Vorteil wird die Klemmkraft mechanisch, durch eine Feder, aufgebaut, und lässt sich mittels eines Pneumatikzylinders temporär deaktivieren, so dass die Klemmung gelöst wird. Alternativ wird die Klemmkraft pneumatisch aufgebaut, so dass die Klemmung beim Ausschalten der Pneumatikleitung gelöst wird.

Es sind auch hydraulische oder elektrische Klemmeinheiten oder alternativ Einheiten mit verstellbaren Elementen (wie Stiften oder Nocken) zur formschlüssigen Fixierung möglich.

Mit Vorteil sind die Halteelemente relativ zum jeweiligen Arm von einer aktiven in eine inaktive Stellung bewegbar. Dies ermöglicht den selektiven Einsatz einzelner Halteelemente, während andere Halteelemente inaktiv sind. Dies erleichtert insbesondere die Anpassung an Werkstücke unterschiedlicher Grösse. Die Bewegung von der aktiven in die inaktive Stellung kann auf unterschiedliche Weise erfolgen.

Bei Vakuumsaugern muss die Vakuumleitung zu Saugern in der inaktiven Stellung selektiv abgesperrt werden. Dieses kann direkt am Vakuumsauger oder über gruppenweise oder zentral vorgesehene Ventile bzw. Ventilbatterien erfolgen.

Mit Vorteil ist an jedem der Arme eine Verstelleinheit angeordnet, um die Halteelemente linear zwischen der aktiven und der inaktiven Stellung zu bewegen. Sind die Halteelemente in der aktiven Stellung beispielsweise in einer Ebene angeordnet, können sie selektiv entlang eines geraden Wegs senkrecht zu dieser Ebene in die inaktive Stellung bewegt werden.

Neben den erwähnten Armen können weitere Arme vorhanden sein, welche keine Verstelleinheit aufweisen. Beispielsweise umfasst das Tooling eine zentrale Gruppe von Armen, welche zum Ergreifen aller Werkstücke genutzt werden sollen, während seitlich der zentralen Gruppe zwei Zusatzgruppen von Armen mit deaktivierbaren Halteelementen vorhanden sind, die selektiv genutzt werden. Auch Arme ohne Halteelemente können vorhanden sein, z. B. solche mit Sensoren, insbesondere zur Detektion, ob tatsächlich nur ein einzelnes Werkstück aufgenommen wurde (Doppelblechsensor).

Bevorzugt umfasst die Verstelleinheit einen einfach wirkenden Pneumatikzylinder und eine Rückstellvorrichtung, insbesondere eine federbasierte Rückstellvorrichtung. Jedes der Halteelemente weist somit genau zwei definierte Stellungen auf, nämlich die aktive Stellung und die inaktive Stellung. Die Steuerung lässt sich äusserst einfach bewerkstelligen, und die beiden Stellungen sind mechanisch präzise definiert. Wird eine federbasierte Rückstellvorrichtung eingesetzt, ergibt sich bei geeigneter Federcharakteristik unmittelbar auch die üblicherweise gewünschte federnde Lagerung des Halteelements, z. B. des Vakuumsaugers. Dies ermöglicht auf einfache Weise eine individuelle Anpassung der vertikalen Position der Halteelemente bei der Aufnahme der Werkstücke, z. B. bei nicht präzise horizontal ausgerichteten Stapeln oder bei der Aufnahme von so genannten "tailored blanks", die in einer Richtung senkrecht zur flächigen Ausdehnung unterschiedliche Höhen aufweisen und so zu Stapeln führen, in welchen das oberste, zu ergreifende, Werkstück, nicht horizontal zu liegen kommt.

Anstelle von linearen Bewegungen sind auch Schwenkbewegungen (oder Kombinationen beider Bewegungsarten) möglich. Sind die Halteelemente in der aktiven Stellung beispielsweise in einer Ebene angeordnet, können die Halteelemente aus dieser Ebene weggeschwenkt werden, z. B. um eine Achse, welche parallel zu dieser Ebene orientiert, aber hinter dieser Ebene angeordnet ist.

In einfacheren Ausführungsformen kann auf die Möglichkeit zur Deaktivierung verzichtet werden. Nicht benötigte Halteeinrichtungen werden in diesem Fall entlang des Verschiebewegs in eine Position verfahren, wo sie nicht in Kontakt mit den zu haltenden Werkstücken kommen, aber das Verfahren nicht stören. Bei Vakuumsaugern wird natürlich auch in diesem Fall eine selektive Absperrmöglichkeit der Vakuumleitung benötigt.

Ein entsprechendes erfindungsgemässes Verfahren zur Bearbeitung von flächigen Werkstücken umfasst folgende Schritte:
a) Verfahren eines Toolings in eine Wechselwirl<ungsposition mit einer Einstellvorrichtung, wobei das Tooling entlang eines linearen Verschiebewegs passiv bewegliche Halteelemente umfasst;
b) Einstellen von Positionen der Halteelemente des Toolings mittels der Einstellvorrichtung, in Abhängigkeit einer Geometrie der zu bearbeitenden flächigen Werkstücke, wobei mehrere der Halteelemente unabhängig voneinander durch die Wechselwirkung mit mehreren linear verschieblichen Elementen der Einstellvorrichtung entlang des Verschiebewegs linear verschoben werden und nach erfolgter Verschiebung eine Position des Halteelements entlang des Verschiebewegs mittels einer am Tooling angeordneten Fixiervorrichtung fixiert wird;
c) Ergreifen der zu bearbeitenden flächigen Werkstücke mit dem Tooling.

Bevorzugt sind in der Wechselwirl<ungsposition das Tooling und die Einstellvorrichtung derart relativ zueinander angeordnet, dass die bewegbaren Elemente der Einstellvorrichtung in derselben Ebene parallel zueinander bewegbar sind, in welcher die Halteelemente linear entlang ihres Verschiebewegs parallel zueinander bewegbar sind. Aufgrund dieser Anordnung lässt sich die Einstellvorrichtung konstruktiv einfach ausbilden, weil die Bewegungsrichtungen der bewegbaren Elemente parallel zueinander sind und somit die für die Verschiebung der Halteelemente benötigten Kräfte alle in dieselbe Richtung einwirken.

Mit Vorteil umfasst das erfindungsgemässe Verfahren den weiteren Schritt des Deaktivierens von Halteelementen des Toolings, welche für das Ergreifen der zu bearbeitenden flächigen Werkstücke nicht benötigt werden. Dieser Schritt kann bei der konkreten Durchführung des Verfahrens fallweise entfallen, wenn alle Halteelemente bereits aktiviert sind und für das Ergreifen der Werkstücke auch benötigt werden.

Dies ermöglicht den selektiven Einsatz einzelner Halteelemente, während andere Halteelemente inaktiv sind. Dies erleichtert insbesondere die Anpassung an Werkstücke unterschiedlicher Grösse. Bei Vakuumsaugern muss die Vakuumleitung zu Saugern in der inaktiven Stellung selektiv abgesperrt werden. Dieses kann direkt am Vakuumsauger oder über gruppenweise oder zentral vorgesehene Ventile bzw. Ventilbatterien erfolgen.

Mit Vorteil umfasst das erfindungsgemässe Verfahren den weiteren Schritt des Aufspreizens mehrerer Werkstücke durch entsprechende Vorrichtungen, welche an den bewegbaren Elementen der Einstellvorrichtung angeordnet sind. Die Elemente sind somit Teil eines so genannten "Fanners". Sowohl zur Umkonfiguration des Toolings als auch für das Aufspreizen müssen die Elemente in an die Werkstückkontur angepasste Positionen bewegt werden, so dass i. W. dieselben Freiheitsgrade für beide Zwecke genutzt werden können.

Mit Vorteil umfasst das erfindungsgemässe Verfahren den weiteren Schritt des Aufnehmens einer Kontur der zu bearbeitenden flächigen Werkstücke durch die bewegbaren Elemente der Einstellvorrichtung. Die Kontur des Werkstücks wird im Anschluss insbesondere bei der Positionierung der Halteelemente berücksichtigt. Die Aufnahme der Kontur erfolgt insbesondere mechanisch, indem die bewegbaren Elemente auf das Werkstück zu gefahren werden, bis sie an dessen Aussenkontur anschlagen. Alternativ ist auch eine berührungslose Detektion möglich, z. B. mit Hilfe von elektromagnetischen, kapazitiven. induktiven oder anderen geeigneten Sensoren.

Durch die Integration dieser Funktion reduziert sich die Anzahl benötigter Elemente und allenfalls auch der Platzbedarf für die Anlage; weil die bewegbaren Elemente zudem sowohl zum Aufnehmen der Kontur als auch zum Positionieren der Halteelemente zum Einsatz gelangen, reduzieren sich mögliche Fehlerquellen zwischen der Aufnahme und der Einstellung.

Alternativ können die Werkstückkonturen auch unabhängig von der erfindungsgemässen Anlage bzw. dem erfindungsgemässen Verfahren erfasst werden, z. B. manuell oder mit Hilfe einer stationären Kamera.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Ein Schrägbild einer erfindungsgemässen Anlage zur Bearbeitung von flächigen Werkstücken;
- Fig. 2: ein Schrägbild des Toolings der Anlage mit maximal ausgefahrenen Haltearmen;
- Fig. 3: eine Draufsicht auf zwei benachbarte, teilweise ausgefahrene Haltearme;
- Fig. 4: ein Schrägbild des Toolings mit teilweise ausgefahrenen Haltearmen;
- Fig. 5: ein Schrägbild des Toolings mit vollständig eingefahrenen Haltearmen;
- Fig. 6: einen Querschnitt durch den Tragebalken des Toolings mit Lagerbuchsen und Klemmeinheiten für die Haltearme;
- Fig. 7: ein Schrägbild der 1<lemmeinheiten;
- Fig. 8: eine Detailansicht eines Halteelements des Toolings;
- Fig. 9: eine Ansicht der Unterseite des Trageball<ens des Toolings mit Val<uumleitungen und pneumatischen Versorgungsleitungen;
- Fig. 10: eine Draufsicht auf die Unterseite des Trageball<ens mit den Vakuumleitungen und pneumatischen Versorgungsleitungen; und
- Fig. 11-22: Schrägbilder und Draufsichten der erfindungsgemässen Anlage zur Erläuterung eines erfindungsgemässen Verfahrens zur Bearbeitung von flächigen Werkstücken.

Grundsätzlich sind in den Figuren gleiche Teile mit gleichen Bezugszeichen versehen.

### Wege zur Ausführung der Erfindung

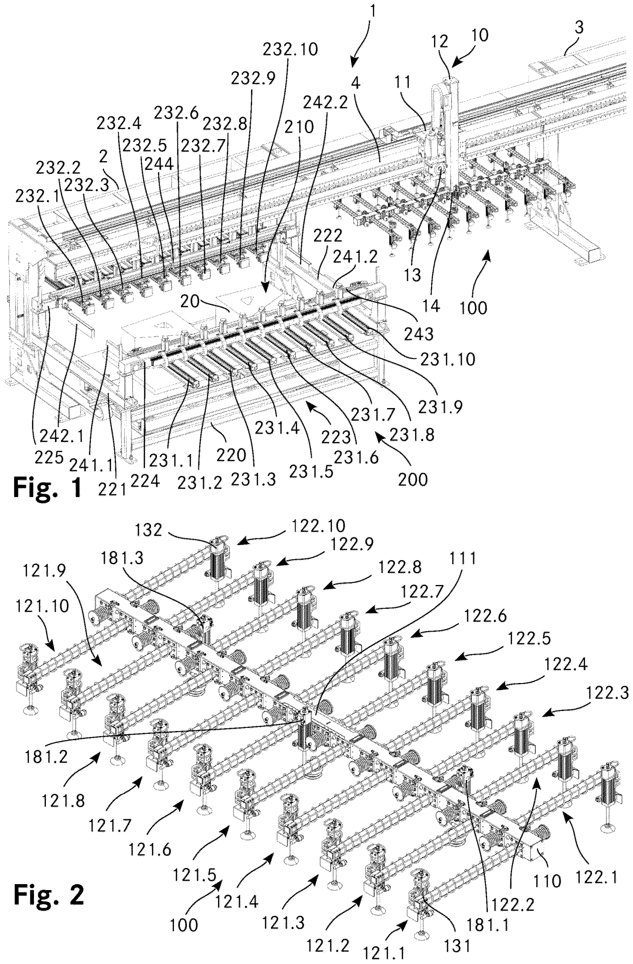

Die Figur 1 ist ein Schrägbild einer erfindungsgemässen Anlage zur Bearbeitung von flächigen Werkstücken. Die Anlage 1 umfasst ein Maschinengestell mit einzelnen Gestelleinheiten 2, 3. Zwischen den Gestelleinheiten 2, 3 ist eine Längsschiene 4 in an sich bekannter Weise angeordnet. Da es sich dabei um gängige Komponenten handelt, werden diese hier nicht näher beschrieben.

Auf der Längsschiene 4 ist ein Handhabungsgerät 10 verfahrbar gelagert. Das Handhabungsgerät 10 umfasst einen Wagen 11, der an der Längsschiene linear verschieblich gelagert ist. Auf dem Wagen 11 ist ein Tragelement 12 in vertikaler Richtung verschieblich gelagert. Die Vertikalposition wird mit Hilfe eines am Wagen 11 angeordneten Antriebs 13 eingestellt. Am unteren Ende weist das Trageelement 12 eine Verbindungsplatte 14 auf. Auch diese Elemente sind an sich bekannt und müssen nicht näher beschrieben werden.

An der Verbindungsplatte 14 ist ein Tooling 100 befestigt. Dieses wird weiter unten, im Zusammenhang mit den Figuren 2-10, näher beschrieben.

An einer der Gestelleinheiten 2 ist eine Bereitstellungseinheit 200 angeordnet. Diese umfasst einen nicht näher dargestellten Bereitstellungsraum 210 für Werkstücke 20. Im dargestellten Beispiel handelt es sich bei den Werkstücken 20 um I<arosseriebleche (z. B. für Seitentüren von Automobilen), die in zwei Stapeln bereitgestellt sind. Die beiden Stapel sind auf einer höhenverstellbaren Auflage (nicht dargestellt) abgelegt. In der Figur 1 befindet sich die Auflage in ihrer tiefsten Position.

Die Bereitstellungseinheit 200 umfasst weiter ein an der Gestelleinheit 2 befestigtes Grundgestell 220, welches sich von der längsschienenseitigen Gestelleinheit 2 bis auf die den Werkstücken 20 gegenüberliegende Seite erstreckt. Dazu umfasst es zwei Querbalken 221, 222, die sich senkrecht zur Längsschiene 4 von der Gestelleinheit 2 auf die gegenüberliegende Seite erstrecken. Dort ist ein Hilfsgestell 223 mit zwei Füssen, zwei vertikalen Stützen, zwei Längsstreben und einer am oberen Ende der Stützen angeordneten Tragestrebe 224 mit den Querbalken 221, 222 verbunden. Längsschienenseitig weist das Grundgestell 220 eine zweite Tragestrebe 225 auf. Beide Tragestreben 224, 225 verlaufen parallel zur Längsschiene 4 und sind einander direkt gegenüber angeordnet. An jeder der Tragestreben 224, 225 sind zehn Einstelleinheiten 231.1...10, 232.1...10 angeordnet. Die Einstelleinheiten 231, 232 sind unabhängig voneinander in Querrichtung, d. h. in einer horizontalen Ebene senkrecht zur Längsschiene, beweglich. Dazu weist jede der Einstelleinheiten 231, 232 einen Servoantrieb auf, mittels welchem ein längliches Einstellelement in Querrichtung relativ zur jeweiligen Tragestrebe 224, 225 verfahren werden kann. Die Antriebe sind stationär auf der jeweiligen Tragestrebe 224, 225 angeordnet. In der Figur 1 befinden sich alle Einstelleinheiten 231, 232 in ihrer äussersten Stellung, mittels der Antriebe können sie aufeinander zu und damit in den Bereitstellungsraum 210 der Werkstücke verfahren werden.

An ihren inneren Enden weisen die Einstelleinheiten 231, 232 Kontaktstücke auf. Diese weisen eine ebene Stirnfläche auf und sind jeweils um eine vertikale Achse schwenkbar. Die Ruheposition der Stirnflächen liegt parallel zur Längsschiene 4, sie wird bei fehlender Krafteinwirkung auf die jeweilige Stirnfläche aufgrund von entsprechenden Federmitteln eingenommen. Hinter jeder Stirnfläche ist ein Dauermagnet angeordnet.

Die Bereitstellungseinheit 200 umfasst weiter vier Seitenführungselemente 241.1, 241.2, 242.1, 242.2, wobei je zwei der Elemente unabhängig voneinander entlang einer Längsschiene 243, 244 verfahrbar sind. Die Längsschienen 243, 244 erstrecken sich parallel zur Längsschiene 4 des Maschinengestells über den gesamten Bereich, welcher von den Einstelleinheiten 231, 232 eingenommen wird. Die Seitenführungselemente erstrecken sich quer zur Erstreckung der Längsschienen 243, 244 in den Bereitstellungsraum 210 für die Werkstücke 20 und weisen ebene vertikale Seitenflächen auf.

Die Figur 2 ist ein Schrägbild des Toolings der Anlage mit maximal ausgefahrenen Haltearmen. Das Tooling 100 umfasst einen Tragebalken 110 mit im Wesentlichen quadratischem Querschnitt, mit einer mittig auf dessen Oberseite angeordneten Verbindungsplatte 111 zur Anbringung an der entsprechenden Verbindungsplatte des Handhabungsgeräts. Am Tragebalken 110 sind beidseitig in regelmässigem Abstand je zehn Haltearme 121.1... 10, 122.1... 10 gelagert. Die Haltearme 121, 122 sind gerade und die Längsrichtung aller Arme ist parallel, senkrecht zur Längsrichtung des Trageball<ens 110. Alle Haltearme 121, 122 und der Tragebalken 110 definieren somit genau eine Ebene.

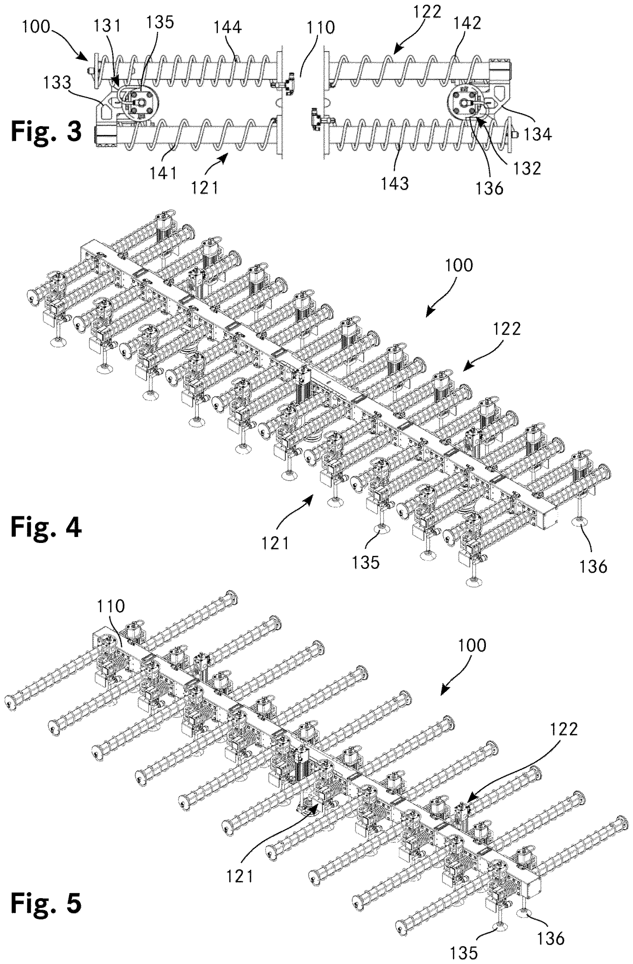

Zur Lagerung der Haltearme 121, 122 umfasst der Tragebalken 110 zwanzig Durchgangsöffnungen mit im Wesentlichen quadratischen Querschnitt, durch welche die Haltearme 121, 122 mit entsprechendem, ebenfalls im Wesentlichen quadratischen Querschnitt hindurchtreten. An ihren äusseren Enden tragen die Haltearme 121, 122 jeweils eine Saugereinheit 131, 132. Die Haltearme 121, 122 und die Saugereinheiten 131, 132 sind weiter unten, im Zusammenhang mit den Figuren 3, 7 und 8, näher beschrieben.

Das Tooling 100 weist weiter drei fest am Tragebalken 110 angeordnete Saugereinheiten 181.1, 181.2, 181.3 auf. Jede dieser Saugereinheiten 181.1...3 umfasst einen an sich bekannten, elektromagnetisch wirkenden Doppelblechsensor. Die Kontaktierung des jeweiligen Werkstücks mit der Saugereinheit 181.1...3 stellt sicher, dass der Doppelblechsensor eine definierte Position relativ zum Werkstück einnimmt und mittels des Sensors festgestellt werden kann, ob nur ein Metallblech vom Tooling 100 gehalten ist oder ob mehrere Bleche aneinander haften. Ist letzteres der Fall, kann verhindert werden, dass gleichzeitig mehrere Bleche in eine nachfolgende Station, z. B. eine Umformpresse, gefördert werden, was zu Schäden an den Werkstücken und/oder der nachfolgenden Station führen würde. Die Anordnung der drei Saugereinheiten 181.1...3 mit den Doppelblechsensoren stellt sicher, dass eine Doppelblechdetel<tion sowohl dann möglich ist, wenn nur ein einzelnes (grossflächiges) Blech transportiert wird, als auch dann, wenn zwei kleinere Bleche nebeneinander vom Tooling 100 erfasst werden. Die Anzahl der Doppelblechsensoren kann den vorgesehenen Anwendungen angepasst werden. Werden nur grossflächige Werkstücke einzeln aufgenommen, kann ein einzelner Doppelblechsensor genügen. Bei der Aufnahme mehrerer Werkstücke nebeneinander können je nach erwarteter Geometrie auch zwei oder aber mehr als drei Doppelblechsensoren (mit entsprechenden Saugereinheiten) sinnvoll sein.

Die Figur 3 ist eine Draufsicht auf zwei benachbarte, teilweise ausgefahrene Haltearme 121, 122 des Toolings 100. Die Haltearme 121, 122 erstrecken sich durch die entsprechenden Öffnungen des Trageball<ens 110 hindurch und ragen beidseitig des Trageball<ens 110 senkrecht über diesen hinaus. Die an den freien Enden der Haltearme 121, 122 angeordneten Saugereinheiten 131, 132 sind bei benachbarten Haltearmen 121, 122 auf bezüglich des Trageball<ens 110 gegenüberliegenden Seiten angeordnet. Dazu ist am entsprechenden stirnseitigen Ende des Haltearms 121, 122 ein L-förmiges Befestigungsprofil 133, 134 befestigt, dessen erster Schenkel sich in der von den Haltearmen 121, 122 definierten Ebene seitlich, senkrecht zum Haltearm 121, 122 erstreckt. Der zweite Schenkel erstreckt sich wiederum in derselben Ebene, senkrecht zum ersten Schenkel nach innen, auf den Tragebalken 110 zu. Am Ende des zweiten Schenkels des Befestigungsprofils 133, 134 ist die jeweilige Saugereinheit 131, 132 angeordnet.

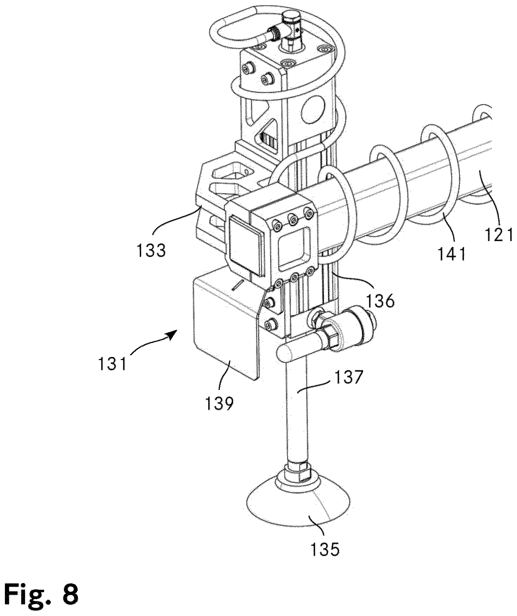

Pro Haltearm 121, 122 erstreckt sich eine Vakuumleitung 141, 142 vom Tragebalken 110 zu einem Saugkopf 135, 136 der Saugereinheit 131, 132. Dazu ist die Vakuumleitung 141, 142 schraubenförmig auf den saugerseitigen Abschnitt des Haltearms 121, 122 gewickelt. Beim Ein- und Ausfahren ändert sich der Windungsabstand, so dass die Vakuumleitung 141, 142 die Längenänderung des entsprechenden, saugerseitigen Abschnitts des Haltearms 121, 122 ohne weiteres mitmachen kann. Eine pneumatische Zufuhrleitung 143, 144 erstreckt sich vom Tragebalken 110 zu dem der Saugereinheit abgewandten Ende des Haltearms 121, 122 und setzt sich von dort aus im Innern des Haltearms 121, 122 bis zur Saugereinheit 131, 132 fort. Auch hier erfolgt eine Anpassung an die veränderliche Länge des der Saugereinheit abgewandten Abschnitts des Haltearms 121, 122 durch eine Veränderung des Windungsabstands. Die pneumatische Zufuhrleitung 143, 144 dient der Versorgung eines Pneumatikzylinders zum Deaktivieren der Saugereinheit 131, 132. Dies ist weiter unten, im Zusammenhang mit der Figur 8, näher beschrieben.

Die Figur 4 ist ein Schrägbild des Toolings 100 mit teilweise ausgefahrenen Haltearmen 121, 122, die Figur 5 ist ein Schrägbild des Toolings 100 mit vollständig eingefahrenen Haltearmen 121, 122. Wie aus diesen Figuren und einem Vergleich mit der Figur 2 ersichtlich ist, wird ein erheblicher Verstellbereich in Querrichtung erreicht. Im dargestellten Ausführungsbeispiel beträgt der Abstand zwischen den gegenüberliegenden Positionen der Saugköpfe 135, 136 im komplett ausgefahrenen Zustand 1'800 mm, im Zustand gemäss Figur 4 1'000 mm und im Zustand gemäss Figur 5 230 mm. Die in den Figuren 2, 4 und 5 dargestellten Konfigurationen sind beispielhaft zu verstehen. In der Praxis werden die unabhängig voneinander einstellbaren Haltearme in der Regel unterschiedliche Querpositionen aufweisen.

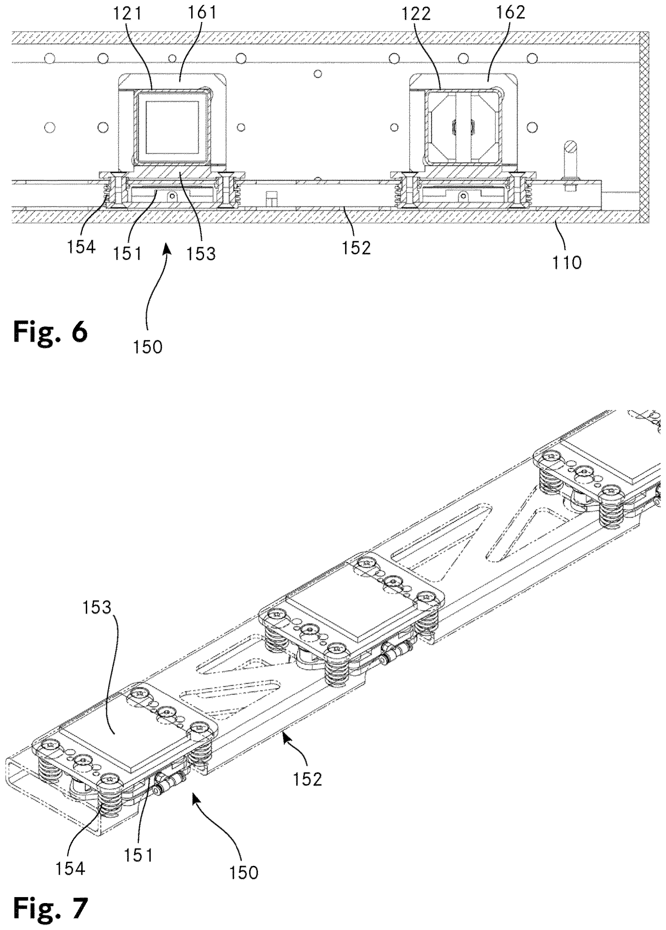

Die Figur 6 zeigt einen Querschnitt durch den Tragebalken des Toolings mit Lagerbuchsen und Klemmeinheiten für die Haltearme, in der Figur 7 sind mehrere Klemmeinheiten im Schrägbild dargestellt.. Jedem Haltearm 121, 122 ist eine Klemmeinheit 150 zugeordnet. Ebenfalls in den Figuren 6 und 7 dargestellt sind die Lagerbuchsen 161, 162, welche beidseitig, einander gegenüberliegend mit der Seitenwand des Trageball<ens 110 verschraubt sind und je eine Lageröffnung aufweisen, welche die Durchgangsöffnung im Tragebalken umgibt. Die Durchgangsöffnung hat einen etwas grösseren Querschnitt als die Lageröffnungen, so dass die Lagerbuchsen 161, 162 ein Gleitlager für den jeweiligen Haltearm 121, 122 bilden. Mit dem Tragebalken 110 kommen die Haltearme 121, 122 nicht in direkten Kontakt.

Alle Klemmeinheiten 150 sind auf einer längs im Tragebalken 110 verlaufenden Schiene 152 montiert. Jede der Klemmeinheiten 150 umfasst eine Andruckplatte 153, welche vertikal beweglich auf der Schiene 152 gelagert und über mehrere Druckfedern 154 in eine Andrucl<stellung in Bezug auf den entsprechenden Haltearm 121, 122 bewegt wird. Die Klemmeinheiten 150 umfassen weiter einen einfach wirkenden Pneumatikzylinder 151, der bei Druckbeaufschlagung die Andruckplatte 153 gegen die Kraft der Druckfedern 154 vom Haltearm 121, 122 weg bewegt. Zu diesem Zweck wirkt der Pneumatil<yzlinder 151 auf eine hinten an der Andruckplatte 153 befestigte Betätigungsplatte ein und drückt diese - zusammen mit der Andruckplatte 153 nach hinten, vom Haltearm 121, 122 weg.

Die Andruckplatte 153 weist eine Antirutschbeschichtung, z. B. aus einem I<autschul<material, auf, so dass der Haltearm 121, 122 bei entsprechendem Anpressdruck kraftschlüssig in seiner Verschiebeposition gehalten ist. Die Haltearme 121, 122 sind im deaktivierten Zustand des Pneumatikzylinders 151 somit aufgrund der Federkraft der Druckfedern 154 der Klemmeinheiten 150 am Tragebalken 110 festgeklemmt. Die Klemmung wird gelöst, sobald der Pneumatikzylinder 151 mit Druck beaufschlagt wird. Die Position der Haltearme 121, 122 relativ zum Tragebalken 110 kann dann durch die Einwirkung externer Kräfte mit geringem Aufwand verändert werden.

Im dargestellten Ausführungsbeispiel sind die Pneumatikzylinder 151 aller Klemmeinheiten 150 an dieselbe Druckleitung angeschlossen, so dass die Klemmeinheiten 150 alle gleichzeitig freigebbar sind.

Die Figur 8 ist eine Detailansicht eines Halteelements des Toolings. Dieses wird durch eine Saugereinheit 131 gebildet, die am freien Ende des Haltearms 121 wie oben beschrieben mit Hilfe eines L-förmigen Befestigungsprofils 133 angebracht ist. Die Saugereinheit 131 umfasst einen Pneumatikzylinder 136, in welchem ein Pneumatikkolben vertikal verschiebbar gelagert ist. Unterhalb des Pneumatikkolbens mündet die pneumatische Zufuhrleitung für dessen Steuerung, welche wie vorstehend erwähnt innerhalb des Hohlprofils des Haltearms 121 in den Bereich der Saugereinheit 131 geführt und über einen Anschluss mit dem unteren I<olbenraum des Pneumatikzylinders 136 verbunden ist.

Am Pneumatikkolben ist eine Kolbenstange 137 angeordnet, welche unten durch eine Öffnung aus dem Gehäuse heraustritt. Am freien Ende der Kolbenstange 137 ist ein Saugkopf 135 angeordnet. Dieser ist durch eine im Innern der Kolbenstange 137 verlaufende Leitung und einen auf der Oberseite des Pneumatikzylinders 136 angeordneten Anschluss mit der Vakuumleitung 141 verbunden. Stirnseitig ist am Pneumatikzylinder 136 eine metallische I<ontal<tplatte 139 angeordnet. Sie umfasst einen Befestigungsabschnitt, welcher mit der vertikalen stirnseitigen Wand des Pneumatikzylinders 136 verschraubt ist, einen oben an den Befestigungsabschnitt anschliessenden Übergangsabschnitt, welcher sich schräg nach unten vom Pneumatikzylinder 136 weg erstreckt, und einen Kontaktabschnitt, welcher an den Übergangsabschnitt anschliesst und sich parallel zum Pneumatikzylinder 136 nach unten erstreckt.

Im Pneumatikzylinder 136 ist eine Schraubenfeder angeordnet. Sie drückt den Pneumatikkolben und damit den Saugkopf 135 bei fehlendem Eingangsdruck in seine untere Stellung und stellt eine federnde Anordnung für das I<ontal<tieren und Halten von Werkstücken mittels des Saugkopfs 135 sicher. Wird die pneumatische Einheit aktiviert, wird der Pneumatikkolben gegen die Kraft der Schraubenfeder nach oben gedrückt, bis er einen entsprechenden Anschlag erreicht. Die Kolbenstange 137 und der Saugkopf 135 werden entsprechend nach oben, auf den Pneumatikzylinder 136 zu, zurückgezogen.

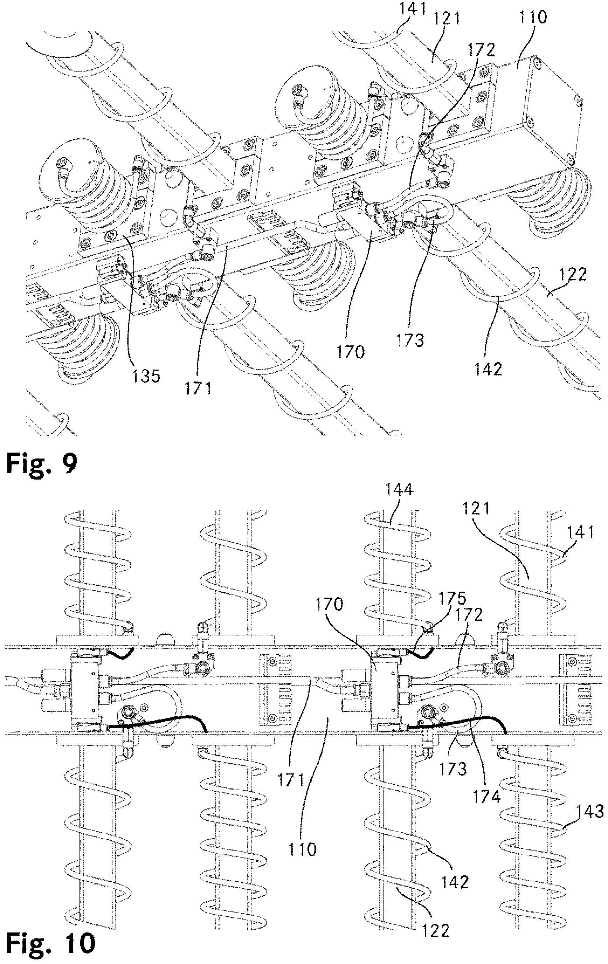

Die Figur 9 zeigt eine Ansicht der Unterseite des Trageball<ens 110 des Toolings mit Vakuumleitungen und pneumatischen Versorgungsleitungen, in der Figur 10 ist eine Draufsicht auf die Unterseite des Trageball<ens 110 mit den Val<uumleitungen und pneumatischen Versorgungsleitungen dargestellt.

Eine mit einer Vakuum-Pumpe verbundene Unterdruckleitung 171 mündet in eine Ventileinrichtung 170. Diese umfasst zwei 3/2-Wegeventile. Deren Ausgänge sind über Verbindungsleitungen 172, 173 mit den Vakuumleitungen 141, 142 zweier einander gegenüberliegender Haltearme 121, 122 verbunden. Die 3/2-Wegeventile der Ventileinrichtung 170 sind pneumatisch vorgesteuert und dazu über Steuerleitungen 174, 175 mit den pneumatischen Versorgungsleitungen 143, 144 verbunden. Die entsprechende Ventileinrichtung 170 und die erwähnten Leitungen finden sich wiederholt, für jedes Paar von Haltearmen am Tragebalken 110.

Wird eine der pneumatischen Versorgungsleitungen 143, 144 mit Druck beaufschlagt, so führt dies - wie vorstehend beschrieben - dazu, dass die Kolbenstange 137 mit dem Saugkopf 135 nach oben, in eine inaktive Stellung, verfahren wird. Der Druck in der Versorgungsleitung 143, 144 führt durch die pneumatische Vorsteuerung weiter dazu, dass das entsprechende, im Ruhezustand offene, 3/2-Wegeventil der Ventileinrichtung 170 in Bezug auf die Unterdruckleitung zum entsprechenden Saugkopf 135 gesperrt wird. Der Saugkopf 135 ist somit deaktiviert.

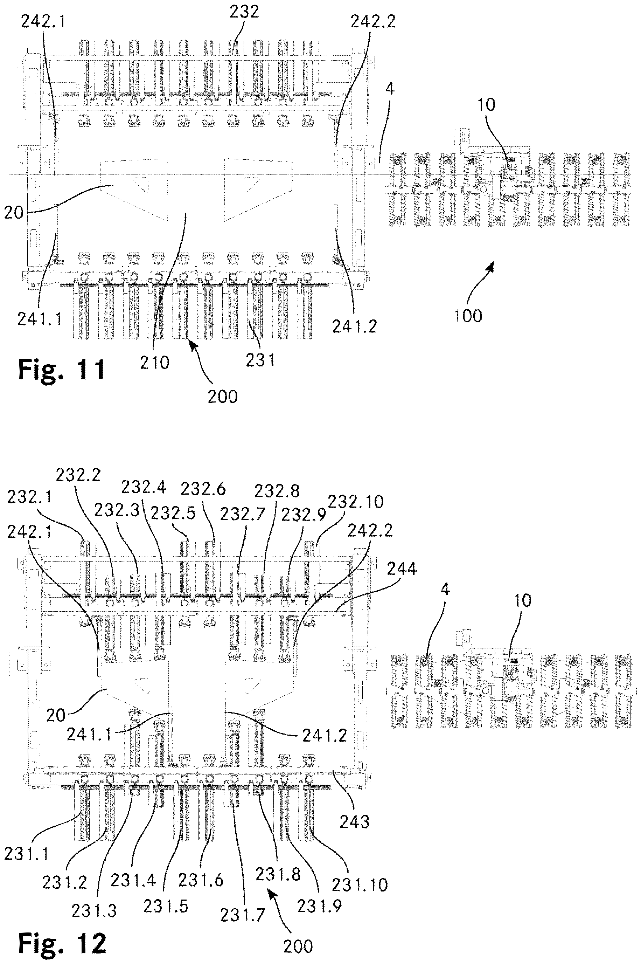

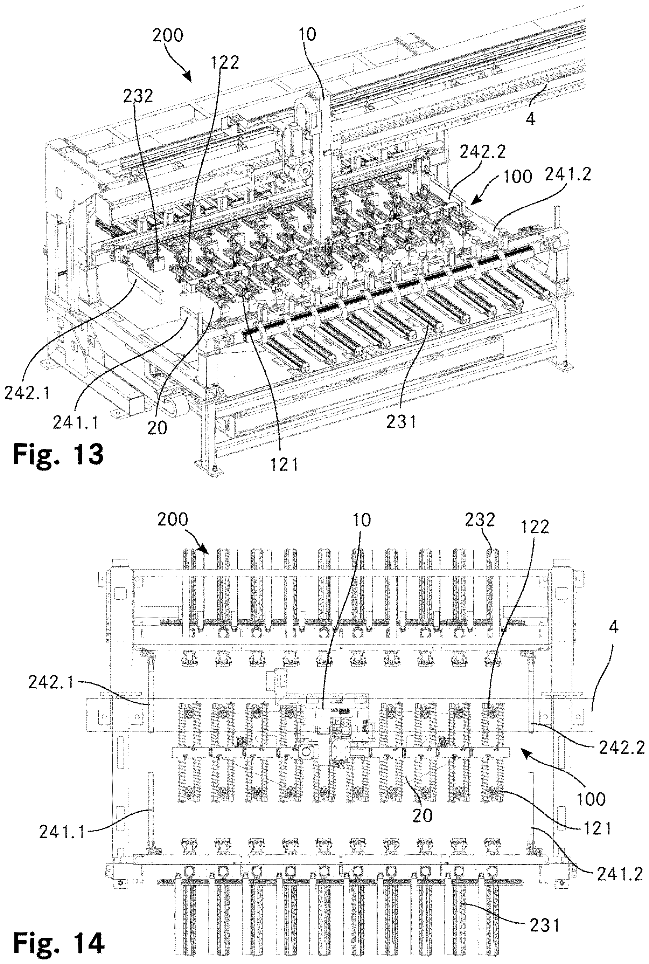

Die Figuren 11-22 dienen zur Erläuterung eines erfindungsgemässen Verfahrens zur Bearbeitung von flächigen Werkstücken. So zeigen die Figuren 11, 12, 14, 16, 19 und 22 Draufsichten auf die erfindungsgemässe Anlage, während in den Figuren 13, 15, 17, 18, 20 und 21 Schrägbilder dargestellt sind.

Die Figur 11 zeigt eine Draufsicht auf die Anlage in einer Ausgangsposition. Das Tooling 100 wurde mit Hilfe des Handhabungsgeräts 10 entlang der Längsschiene 4 in einer Ausgangsstellung ausserhalb der Bereitstellungseinheit 200 positioniert. Die insgesamt zwanzig Haltearme 121, 122 befinden sich in einer mittleren Stellung, analog zur Situation gemäss Figur 4. Die Werkstücke 20 befinden sich in zwei ausgerichteten Stapeln im Bereitstellungsraum 210 der Bereitstellungseinheit 200. Die insgesamt zwanzig Einstelleinheiten 231, 232 befinden sich alle in ihrer äussersten, zurückgezogenen Position. Die Seitenführungselemente 241.1, 241.2, 242.1, 242.2 befinden sich in ihren äussersten Längspositionen, ausserhalb des Bereichs der Einstelleinheiten 231, 232.

Ausgehend von dieser Ausgangsposition erfolgt in einem ersten Schritt das Teaching der Konturen der Werkstücke 20. Dieses ist in der Draufsicht der Figur 12 dargestellt. Bei der dargestellten Konfiguration werden dann zunächst die Seitenführungselemente 241.1, 241.2 einer Seite in eine Mittelstellung, zwischen den beiden Werkstücken 20 verfahren. Die Werkstücke 20 werden dann mit Hilfe der höhenverstellbaren Auflage in eine erhöhte Position gebracht, so dass sie die durch die Einstelleinheiten 231, 232 der Bereitstellungseinheit 200 definierte horizontale Ebene durchstossen. Die sich in der Mittelstellung befindlichen Seitenführungselemente 241.1, 241.2 werden dann entlang ihrer Längsschiene 243 nach aussen verfahren, und die in ihrer äusseren Stellung befindlichen Seitenführungselemente 242.1, 242.2 der anderen Seite werden entlang ihrer Längsschiene 244 nach innen verfahren, bis alle Seitenführungselemente 241.1, 241.2, 242.1, 242.2 mit ihren Seitenflächen einen der Werkstückstapel kontaktieren. Die Einstelleinheiten 231, 232 werden in der Folge nach innen bewegt, bis ihre Kontaktstücke die Kontur der Stapel der Werkstücke 20 kontaktieren. Dabei passt sich die Orientierung der Stirnfläche der Kontaktstücke der Kontur des Werkstücks 20 an der Kontaktstelle an. Einstelleinheiten 231.1, 231.2, 231.5, 231.6, 231.9, 231.10, 232.1, 232.5, 232.6, 232.10, welche auch in der vollständig eingefahrenen Stellung keinen Kontakt mit den Werkstücken 20 erhalten, werden wieder ganz zurückgefahren. Die Position der übrigen Einstelleinheiten 231.3, 231.4, 231.7, 231.8, 232.2, 232.3, 232.4, 232.7, 232.8, 232.9 wird in der Anlagensteuerung gespeichert. Dies schliesst das Teaching der Werkstückkonturen ab.

Die Einstelleinheiten 231, 232 der Bereitstellungseinheit 200 werden dann ganz nach aussen, in ihre zurückgezogene Position verfahren, und die Werkstücke 20 werden abgesenkt. Auch die Seitenführungselemente 241.1, 241.2, 242.1, 242.2 werden in ihre äussere Ruheposition verfahren. Nun kann das Tooling 100 mit Hilfe des Handhabungsgeräts 10 entlang der Längsschiene 4 in die Bereitstellungseinheit 200 verfahren werden. Das Tooling 100 wird in seiner Längsposition entlang der Längsschiene 4 und in seiner Höhe so ausgerichtet, dass jede der Längsachsen der Haltearme 121, 122 auf je eine Längsachse einer der Einstelleinheiten 231, 232 ausgerichtet ist. Die entsprechende Situation ist im Schrägbild der Figur 13 und der Draufsicht der Figur 14 dargestellt.

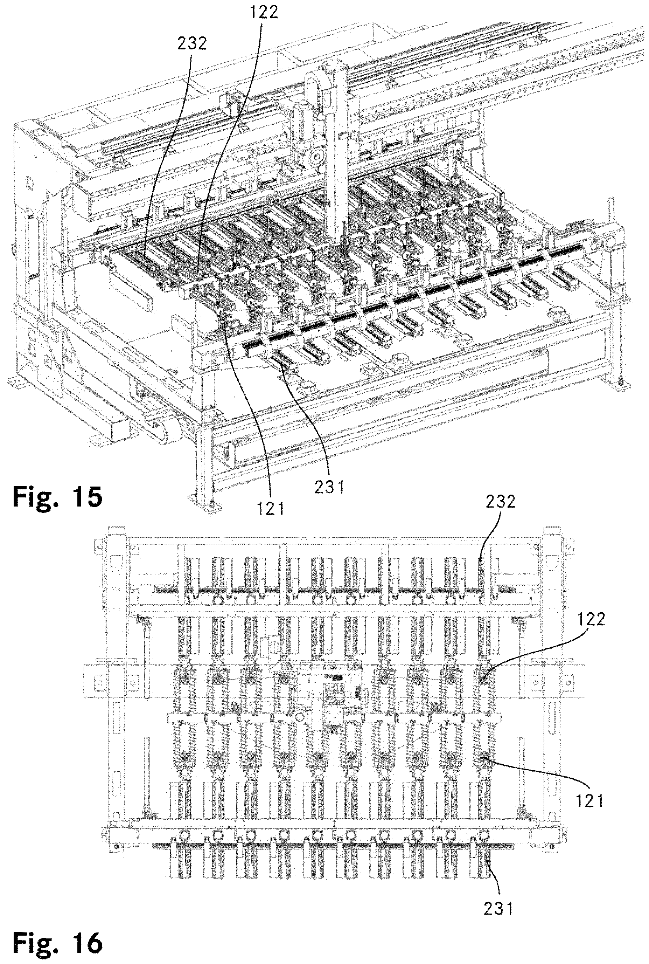

Als nächstes werden die Einstelleinheiten 231, 232 mit ihren Kontaktstücken nach innen, bis zu den Enden der Haltearme 121, 122, verfahren. Die Dauermagnete werden unmittelbar hinter die Stirnfläche der Kontaktstücke verfahren, so dass sie wirksam werden und mit den metallischen I<ontal<tplatten 139 der Haltearme 121, 122 (vgl. Figur 8) zusammenwirken. Anschliessend werden die Klemmeinheiten 150 (vgl. Figuren 6, 7) gelöst. Die Haltearme 121, 122 können somit mit Hilfe der Einstelleinheiten 231, 232 in ihrer Längsrichtung in beide Richtungen frei verschoben und positioniert werden. Diese resultierende Situation ist im Schrägbild gemäss Figur 15 und der Draufsicht gemäss Figur 16 dargestellt.

Die Positionierung der Haltearme 121, 122 erfolgt gemäss den erfassten Positionen der Einstelleinheiten 231, 232 im früheren Teaching-Schritt. Dabei ergibt sich die Position des Saugkopfs einer Saugereinheit eines Haltearms 121, 122 wie folgt aus der erfassten Position, wobei die Mittellinie des Trageball<ens mit der Mittellinie der Bereitstellungseinheit 200 zusammenfällt:

| Position | Einstelleinheit (erfasst) | Haltearm / Saugereinheit (eingestellt) |
|---|---|---|
| Bezugspunkt | Kontaktpunkt mit Werkstückkontur | Zentrum des Saugkopfs |
| Fall 1 | keine (kein Kontakt der Einstelleinheit mit der Werkstückkontur) | ganz innen |
| Fall 2 | Abstand x von der Mittellinie | Abstand y von der Mittellinie des Trageball<ens |
| | | y = x -Δa |

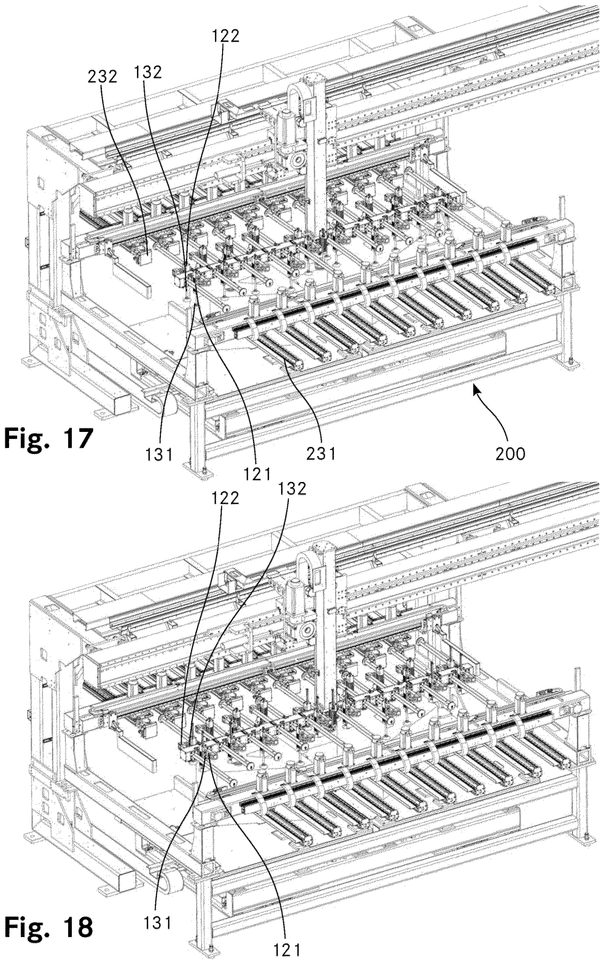

Der Wert für den Offset Δa ist so gewählt, dass der Saugkopf ganz innerhalb der Werkstückkontur zu liegen kommt, auch bei einer Kontur, die relativ zur Mittellinie schräg verläuft. Nach Einstellung der entsprechenden Position werden die Klemmeinheiten 150 aktiviert, so dass die Position der Haltearme 121, 122 fixiert wird. Die Dauermagnete werden wieder von der Stirnfläche der Kontaktstücke nach hinten verfahren, so dass sie keine relevanten Zugkräfte mehr auf die Kontaktplatten der Haltearme 121, 122 ausüben. Das Ergebnis der Positionierung nach Wegfahren der Einstelleinheiten 231, 232 ist in der Figur 17 dargestellt.

Die Saugereinheiten 131, 132 der Haltearme 121, 122, welche gemäss dem Fall 1 ganz innen positioniert wurden, werden nun durch Betätigen des Pneumatikkolbens angehoben. Dies deaktiviert, wie vorstehend beschrieben, auch die Vakuumleitung zum entsprechenden Saugkopf. Das Ergebnis ist in der Figur 18 dargestellt.

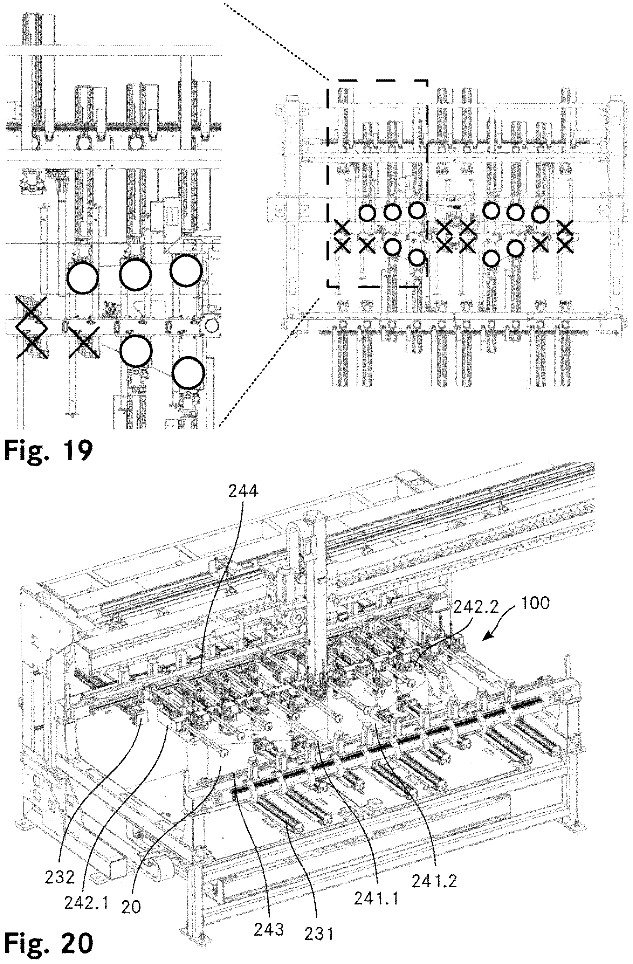

In der Draufsicht gemäss Figur 19 ist dargestellt, welche der Saugereinheiten aktiviert (Kreis) und welche deaktiviert (X) sind. Aus der Detaildarstellung der Figur 19 gehen die Positionen y der Saugköpfe und die erfassten Abstände x der Einstelleinheiten hervor.

Die Seitenführungselemente 241.1, 241.2 einer Seite werden nun wieder in eine Mittestellung verfahren. Die Werkstücke 20 können nun wieder angehoben werden. Anschliessend werden alle Seitenführungselemente 241.1, 241.2, 242.1, 242.2 entlang der jeweiligen Längsschiene 243, 244 auf die Werkstücke zu verfahren, bis sie diese seitlich kontaktieren. Danach werden die verwendeten Einstelleinheiten 231, 232 nach innen verfahren, bis sie die Kontur der Werkstücke 20 berühren und die Stirnflächen der Kontaktstücke auf die Kontur ausgerichtet sind. Die Magnete werden anschliessend wieder aktiviert. Die Einstelleinheiten wirken sodann als Fanner und führen zu einer Aufspreizung der obersten zwei Werkstücke 20 jedes Stapels. Dies vermeidet ein Anhaften des zweitobersten Werkstücks am obersten und vereinfacht so die Aufnahme des jeweils obersten Werkstücks 20. Die entstehende Situation ist in der Figur 20 dargestellt.

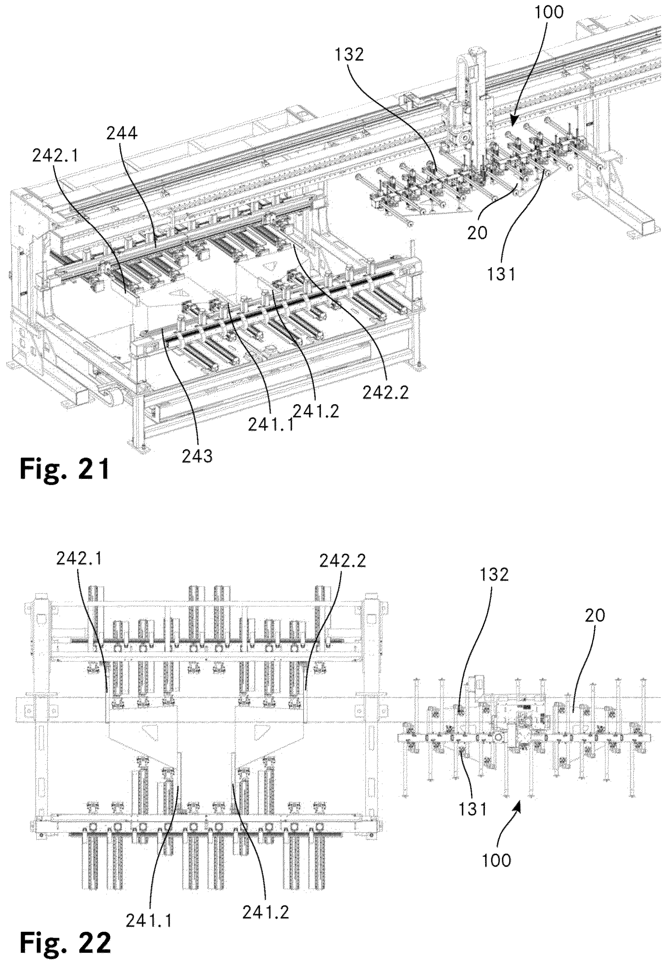

Die zwei obersten Werkstücke 20 können nun mit den aktivierten Saugereinheiten 131, 132 des Toolings 100 erfasst und weg transportiert werden, vgl. Figur 21. Jeweils nach Abheben eines Werkstücks 20 oder einer vorgegebenen Anzahl von Werkstücken werden die Stapel nach oben verfahren, bis sie die Aufnahmehöhe erreicht haben, in welcher die Fanner die obersten Werkstücke zuverlässig aufspreizen können.

Gestützt auf die Figuren 11-22 wurden die Konfiguration des Toolings sowie der Abtransport einzelner Werkstücke von Werkstückstapeln beschrieben. An diese Schritte schliessen sich üblicherweise weitere Schritte an, während denen das Werkstück vom Tooling gehalten ist. Beispielsweise wird das vom Tooling gehaltene Werkstück auf ein Transportband abgelegt, welches zu einer weiteren Verarbeitungsstation führt.

Die Erfindung ist nicht auf das dargestellte Ausführungsbeispiel beschränkt. So kann beispielweise das Tooling eine andere Geometrie oder eine andere Anzahl und/oder Anordnung der Haltearme aufweisen. Nebst den verstell- und deaktivierbaren Saugköpfen können weitere Saugköpfe am Tooling angeordnet sein, die nicht verstellbar und/oder nicht deaktivierbar sind, z. B. in einem zentralen Bereich, wenn davon ausgegangen ist, dass in diesem Bereich stets ein Kontakt mit einem zu verarbeitenden Werkstück hergestellt wird.

Anstelle von Einstelleinheiten mit verschwenkbaren Kontaktstücken mit einer ebenen Stirnfläche können Einstelleinheiten mit einer konvexen Stirnfläche eingesetzt werden.

Anstelle von Dauermagneten können zudem auch Elektromagnete eingesetzt werden. Diese können durch Ein- und Ausschalten der Stromzuführung aktiviert bzw. deaktiviert werden.

Anstelle des Zusammenwirkens der Einstelleinheiten mit den Haltearmen mittels Magneten kann auch eine rein mechanische Interaktion vorgesehen sein. Die Haltearme werden beispielsweise in freigegebenem Zustand mittels eines Federelements in ihre maximal ausgefahrene Position bewegt, von den Einstelleinheiten durch Einwirken einer gegen die Federkraft wirkenden mechanischen Kraft in ihre gewünschte Position geschoben und dort dann mit Hilfe der entsprechenden Klemmeinheit fixiert.

Die Kombination der Einstelleinheiten mit Aufspreizmagneten ist denn auch nicht zwingend. Bei einer vereinfachten Ausführungsform der Erfindung umfasst die Vorrichtung zum Einstellen der Haltearmpositionen nur gerade zwei bewegliche Elemente, welche jeweils mit einem Haltearm auf einer Seite des Trageball<ens zusammenwirken können. Zur Konfiguration des Toolings wird dieses nacheinander in die Wechselwirl<ungspositionen der Haltearme mit den beweglichen Elementen gebracht. Es sind zudem auch Zwischenlösungen möglich, bei welchen pro Seite mehrere bewegliche Elemente vorhanden sind, aber zur Konfiguration des gesamten Toolings mehrere Schritte ausgeführt werden (z. B. je 5 Elemente pro Seite, Konfiguration in zwei Schritten bei je 10 Haltearmen).

Zusammenfassend ist festzustellen, dass die Erfindung eine Anlage mit einem Tooling zum Ergreifen von flächigen Werkstücken schafft, welches einfach und schnell automatisch konfigurierbar ist und ein geringes Gewicht aufweist.

## Patentansprüche

1. Anlage (1) zur Bearbeitung von flächigen Werkstücken, umfassend
a) eine Transportvorrichtung (11), wobei an der Transportvorrichtung (11) ein Tooling (100) befestigt ist,
wobei das Tooling (100) einen Grundkörper (110) und mehrere am Grundkörper (110) angeordnete Halteelemente (131, 132) umfasst, wobei die Halteelemente (131, 132) unabhängig voneinander relativ zum Grundkörper (110) beweglich sind, wobei jedes der Halteelemente (131, 132) in einem Endbereich eines Arms (121.1... 10, 122.1... 10) befestigt ist, wobei die Arme (121, 122) relativ zum Grundkörper (110) entlang eines linearen Verschiebewegs in einer Längsausdehnung des jeweiligen Arms (121.1... 10, 122.1... 10) passiv verschiebbar sind und das Tooling (100) für jeden der Arme (121, 122) eine Fixiervorrichtung (150) umfasst, mittels welcher eine Position des jeweiligen Arms (121.1... 10, 122.1... 10) entlang des Verschiebewegs feststellbar ist,
und
b) eine vom Tooling (100) separate Einstellvorrichtung zum Verschieben der Arme (121, 122) relativ zum Grundkörper (110) des Toolings (100), wobei die Einstellvorrichtung in einem Bereich der Anlage (1) angeordnet ist, in welchen das Tooling (100) mittels der Transportvorrichtung (11) verfahrbar ist,
wobei die Einstellvorrichtung mehrere linear verschiebliche Elemente (231, 232) umfasst, wobei das Tooling (100) relativ zur Einstellvorrichtung so positionierbar ist, dass die linear verschieblichen Elemente (231, 232) gleichzeitig mit mehreren der Arme (121, 122) zu deren Verschiebung entlang des Verschiebewegs zusammenwirken können.

2. Anlage (1) nach Anspruch 1, **gekennzeichnet durch** eine Bereitstellungseinheit (200) für die flächigen Werkstücke, wobei die Einstellvorrichtung in die Bereitstellungseinheit (200) integriert ist.

3. Anlage (1) nach Anspruch 2, **dadurch gekennzeichnet, dass** die Elemente (231, 232) Vorrichtungen zum Aufspreizen von bereitzustellenden Werkstücken aufweisen, insbesondere Magnetköpfe zum Aufspreizen von bereitzustellenden metallischen Werkstücken.

4. Anlage (1) nach einem der Ansprüche 1 bis 3, **dadurch gekennzeichnet, dass** es sich bei den Halteelementen (131, 132) um Vakuumsauger handelt.

5. Anlage (1) nach einem der Ansprüche 1 bis 4, **dadurch gekennzeichnet, dass** der Grundkörper (110) durch einen Tragebalken gebildet ist, wobei die Arme (121, 122) verschiebbar am Tragebalken gelagert sind.

6. Anlage (1) nach Anspruch 5, **dadurch gekennzeichnet, dass** die Arme (121, 122) und der Tragebalken eine gemeinsame Ebene aufspannen.

7. Anlage (1) nach Anspruch 6, **dadurch gekennzeichnet, dass** die linearen Verschiebewege der Arme (121, 122) parallel zueinander orientiert sind.

8. Anlage (1) nach einem der Ansprüche 5 bis 7, **dadurch gekennzeichnet, dass** die linearen Verschiebewege aller Arme (121, 122) senkrecht orientiert sind zu einer Längsausdehnung des Trageball<ens, wobei die Arme (121, 122) mit ihrer Längsausdehnung den Tragebalken kreuzen.

9. Anlage (1) nach einem der Ansprüche 1 bis 8, **dadurch gekennzeichnet, dass** die Arme (121, 122) in am Grundkörper (110) angeordneten Gleitlagern (161, 162) geführt sind.

10. Anlage (1) nach einem der Ansprüche 1 bis 9, **dadurch gekennzeichnet, dass** die Fixiervorrichtungen (150) durch Klemmeinheiten (150) gebildet sind.

11. Anlage (1) nach einem der Ansprüche 1 bis 10, **dadurch gekennzeichnet, dass** die Halteelemente (131, 132) relativ zum jeweiligen Arm (121.1...10, 122.1...10) von einer aktiven in eine inaktive Stellung bewegbar sind.

12. Anlage (1) nach Anspruch 11, **dadurch gekennzeichnet, dass** an jedem der Arme (121, 122) eine Verstelleinheit (136) angeordnet ist, um die Halteelemente (131, 132) linear zwischen der aktiven und der inaktiven Stellung zu bewegen.

13. Anlage (1) nach Anspruch 12, **dadurch gekennzeichnet, dass** die Verstelleinheit (136) einen einfach wirkenden Pneumatikzylinder (136) und eine Rückstellvorrichtung, insbesondere eine federbasierte Rückstellvorrichtung, umfasst.

14. Verfahren zur Bearbeitung von flächigen Werkstücken, umfassend folgende Schritte:
a) Verfahren eines Toolings (100) in eine Wechselwirl<ungsposition mit einer Einstellvorrichtung (200), wobei das Tooling (100) entlang eines linearen Verschiebewegs passiv bewegliche Halteelemente (131, 132) umfasst;
b) Einstellen von Positionen der Halteelemente (131, 132) des Toolings (100) mittels der Einstellvorrichtung (200), in Abhängigkeit einer Geometrie der zu bearbeitenden flächigen Werkstücke, wobei mehrere der Halteelemente (131, 132) unabhängig voneinander durch die Wechselwirkung mit mehreren linear verschieblichen Elementen (231, 232) der Einstellvorrichtung (200) entlang des Verschiebewegs linear verschoben werden und nach erfolgter Verschiebung eine Position des Halteelements (232.1...231.10, 232.1...232.10) entlang des Verschiebewegs mittels einer am Tooling (100) angeordneten Fixiervorrichtung (150) fixiert wird;
c) Ergreifen der zu bearbeitenden flächigen Werkstücke mit dem Tooling (100).

15. Verfahren nach Anspruch 14, **dadurch gekennzeichnet, dass** in der Wechselwirl<ungsposition das Tooling (100) und die Einstellvorrichtung (200) derart relativ zueinander angeordnet sind, dass die bewegbaren Elemente (231, 232) der Einstellvorrichtung (200) in derselben Ebene parallel zueinander bewegbar sind, in welcher die Halteelemente (131, 132) linear entlang des Verschiebewegs parallel zueinander bewegbar sind.

16. Verfahren nach Anspruch 14 oder 15, umfassend folgenden weiteren Schritt:
d) Deaktivieren von Halteelementen (131, 132) des Toolings (100), welche für das Ergreifen der zu bearbeitenden flächigen Werkstücke nicht benötigt werden.

17. Verfahren nach einem der Ansprüche 14 bis 16, umfassend folgenden weiteren Schritt:
e) Aufspreizen mehrerer Werkstücke durch Vorrichtungen, welche an den bewegbaren Elementen (231, 232) der Einstellvorrichtung (200) angeordnet sind.

18. Verfahren nach einem der Ansprüche 14 bis 17, umfassend folgenden weiteren Schritt:
f) Aufnehmen einer Kontur der zu bearbeitenden flächigen Werkstücke durch die bewegbaren Elemente (231, 232) der Einstellvorrichtung (200).

## Claims

1. System (1) for processing flat workpieces, comprising
a) a transport device (11), wherein a tooling (100) is attached to the transport device (11),
wherein the tooling (100) comprises a base body (110) and a plurality of holding elements (131, 132) arranged on the base body (110), wherein the holding elements (131, 132) are movable independently of each other relative to the base body (110), wherein each of the holding elements (131, 132) is fixed in an end region of an arm (121.1...10, 122.1...10), wherein the arms (121, 122) are passively displaceable relative to the base body (110) along a linear displacement path in a longitudinal extension of the respective arm (121.1...10,122.1...10) and the tooling (100) comprises a fixing device (150) for each of the arms (121, 122), by means of which a position of the respective arm (121.1...10, 122.1...10) can be fixed along the displacement path,
and
b) an adjustment device separate from the tooling (100) for displacing the arms (121, 122) relative to the base body (110) of the tooling (100), wherein the adjusting device is arranged in an area of the system (1) into which the tooling (100) can be moved by means of the transport device (11),
wherein the adjustment device comprises a plurality of linearly displaceable elements (231, 232), wherein the tooling (100) is positionable relative to the adjustment device such that the linearly displaceable elements (231, 232) can co-operate simultaneously with a plurality of the arms (121, 122) to displace them along the displacement path.

2. System (1) according to claim 1, **characterised by** a supply unit (200) for the flat workpieces, wherein the adjustment device is integrated into the supply unit (200).

3. System (1) according to claim 2, **characterised in that** the elements (231, 232) have devices for spreading out workpieces to be provided, in particular magnetic heads for spreading out metallic workpieces to be provided.

4. System (1) according to one of claims 1 to 3, **characterised in that** the holding elements (131, 132) are vacuum cups.

5. System (1) according to one of claims 1 to 4, **characterised in that** the base body (110) is formed by a support beam, wherein the arms (121, 122) are displaceably mounted on the support beam.

6. System (1) according to claim 5, **characterised in that** the arms (121, 122) and the support beam span a common plane.

7. System (1) according to claim 6, **characterised in that** the linear displacement paths of the arms (121, 122) are oriented parallel to one another.

8. System (1) according to one of claims 5 to 7, **characterised in that** the linear displacement paths of all arms (121, 122) are oriented perpendicularly to a longitudinal extension of the support beam, the arms (121, 122) crossing the support beam with their longitudinal extension.

9. System (1) according to one of claims 1 to 8, **characterised in that** the arms (121, 122) are guided in slide bearings (161, 162) arranged on the base body (110).

10. System (1) according to one of claims 1 to 9, **characterised in that** the fixing devices (150) are formed by clamping units (150).

11. System (1) according to one of claims 1 to 10, **characterised in that** the holding elements (131, 132) can be moved relative to the respective arm (121.1...10, 122.1...10) from an active to an inactive position.

12. System (1) according to claim 11, **characterised in that** an adjustment unit (136) is arranged on each of the arms (121, 122) in order to move the holding elements (131, 132) linearly between the active and the inactive position.

13. System (1) according to claim 12, **characterised in that** the adjustment unit (136) comprises a single-acting pneumatic cylinder (136) and a return device, in particular a spring-based return device.

14. Method for processing flat workpieces, comprising the following steps:
a) Moving a tooling (100) into an interaction position with an adjustment device (200), wherein the tooling (100) comprises holding elements (131, 132) passively movable along a linear displacement path;
b) adjusting positions of the holding elements (131, 132) of the tooling (100) by means of the adjustment device (200), depending on a geometry of the flat workpieces to be processed, wherein several of the holding elements (131, 132) are displaced linearly along the displacement path independently of one another by the interaction with several linearly displaceable elements (231, 232) of the adjustment device (200) and, after displacement has taken place, a position of the holding element (231.1...231.10, 232.1...232.10) is fixed along the displacement path by means of a fixing device (150) arranged on the tooling (100);
c) Gripping the flat workpieces to be processed with the tooling (100).

15. Method according to claim 14, **characterised in that**, in the interaction position, the tooling (100) and the adjustment device (200) are arranged relative to one another in such a way that the linearly displaceable elements (231, 232) of the adjustment device (200) can be moved parallel to one another in the same plane in which the holding elements (131, 132) can be moved linearly parallel to one another along the displacement path.

16. Method according to claim 14 or 15, comprising the following further step:
d) Deactivation of holding elements (131, 132) of the tooling (100) that are not required for gripping the flat workpieces to be processed.

17. Method according to any one of claims 14 to 16, comprising the following further step:
e) Spreading of several workpieces by means of devices which are arranged on the linearly displaceable elements (231, 232) of the adjustment device (200).

18. A method according to any one of claims 14 to 17, comprising the following further step:
f) Picking up a contour of the flat workpieces to be processed by the linearly displaceable elements (231, 232) of the setting device (200).

## Revendications

1. Installation (1) pour l'usinage de pièces plates, comprenant
a) un dispositif de transport (11), dans lequel un outillage (100) est fixé au dispositif de transport (11),
dans lequel l'outillage (100) comprend un corps de base (110) et plusieurs éléments de maintien (131, 132) disposés sur le corps de base (110), dans lequel les éléments de maintien (131, 132) sont mobiles indépendamment les uns des autres par rapport au corps de base (110), dans lequel chacun des éléments de maintien (131, 132) est fixé dans une zone d'extrémité d'un bras (121.1, ... 10, 122.1 ... 10), dans lequel les bras (121, 122) sont configurés de manière à pouvoir être déplacés passivement par rapport au corps de base (110) le long d'un trajet de déplacement linéaire dans une extension longitudinale du bras respectif (121.1, ... 10, 122.1 ... 10) et dans lequel l'outillage (100) comprend pour chacun des bras (121, 122) un dispositif de fixation (150) au moyen duquel une position du bras respectif (121.1, ... 10, 122.1 ... 10) le long du trajet de déplacement est déterminable,
et
b) un dispositif de réglage séparé de l'outillage (100) pour déplacer les bras (121, 122) par rapport au corps de base de l'outillage, dans lequel le dispositif de réglage est disposé dans une zone de l'installation (1) dans laquelle l'outillage (100) est configuré de manière à pouvoir être déplacé au moyen du dispositif de transport (11),
dans lequel le dispositif de réglage comprend une pluralité d'éléments déplaçables linéairement (231, 232), dans lequel l'outillage (100) est configuré de manière à pouvoir être positionné par rapport au dispositif de réglage de telle sorte que les éléments (231, 232) déplaçables linéairement puissent coopérer simultanément avec une pluralité des bras (121, 122) pour leur déplacement le long du trajet de déplacement.

2. Installation (1) selon la revendication 1, **caractérisée par** une unité de mise à disposition (200) des pièces planes, dans laquelle le dispositif de réglage est intégré à l'unité de mise à disposition (200).

3. Installation (1) selon la revendication 2, **caractérisée en ce que** les éléments (231, 232) comportent des dispositifs d'écartement des pièces à fournir, notamment des têtes magnétiques d'écartement des pièces métalliques à fournir.

4. Installation (1) selon l'une des revendications 1 à 3, **caractérisée en ce que** les éléments de maintien (131, 132) sont des ventouses à vide.

5. Installation (1) selon l'une des revendications 1 à 4, **caractérisée en ce que** le corps de base (110) est formé par une poutre porteuse, dans laquelle les bras (121, 122) sont montés de manière à être mobiles sur la poutre porteuse.

6. Installation (1) selon la revendication 5, **caractérisée en ce que** les bras (121, 122) et la poutre porteuse s'étendent sur un plan commun.

7. Installation (1) selon la revendication 6, **caractérisée en ce que** les trajets de déplacement linéaires des bras (121, 122) sont orientés parallèlement les uns aux autres.

8. Installation (1) selon l'une des revendications 5 à 7, **caractérisée en ce que** les trajets de déplacement linéaires de tous les bras (121, 122) sont orientés perpendiculairement à une extension longitudinale de la poutre porteuse, dans laquelle les bras croisent la poutre porteuse par leur extension longitudinale.

9. Installation (1) selon l'une des revendications 1 à 8, **caractérisée en ce que** les bras (121, 122) sont guidés dans des paliers lisses (161, 162) disposés sur le corps de base (110).

10. Installation (1) selon l'une des revendications 1 à 9, **caractérisée en ce que** les dispositifs de fixation (150) sont formés par des unités de serrage (150).

11. Installation (1) selon l'une des revendications 1 à 10, **caractérisée en ce que** les éléments de maintien (131, 132) sont mobiles par rapport au bras respectif (121.1, ... 10, 122.1 ... 10) d'une position active à une position inactive.

12. Installation (1) selon la revendication 11, **caractérisée en ce qu'**une unité de réglage (136) est disposée sur chacun des bras (121, 122) pour déplacer linéairement les éléments de maintien (131, 132) entre la position active et la position inactive.

13. Installation (1) selon la revendication 12, **caractérisée en ce que** l'unité de réglage (136) comprend un vérin pneumatique (136) à simple effet et un dispositif de rappel, en particulier un dispositif de rappel à base de ressort.

14. Procédé d'usinage de pièces planes, comprenant les étapes suivantes :
a) déplacer un outillage (100) dans une position d'interaction avec un dispositif de réglage (200), dans lequel l'outillage (100) comprend des éléments de maintien (131, 132) passivement mobiles le long d'un trajet de déplacement linéaire ;
b) régler des positions des éléments de maintien (131, 132) de l'outillage (100) au moyen du dispositif de réglage (200), en fonction d'une géométrie des pièces planes à usiner, dans lequel plusieurs des éléments de maintien (131, 132) sont déplacés linéairement le long du trajet de déplacement, indépendamment les uns des autres, par l'interaction avec plusieurs éléments (231, 232) déplaçables linéairement du dispositif de réglage (200) et, une fois le déplacement effectué, une position de l'élément de maintien (232.1 ... 231.10, 232.1 ... 232.10) est fixée le long du trajet de déplacement au moyen d'un dispositif de fixation (150) disposé sur l'outillage (150);
c) saisir les pièces plates à usiner avec l'outillage (100).

15. Procédé selon la revendication 14, **caractérisé en ce que**, dans la position d'interaction, l'outillage (100) et le dispositif de réglage (200) sont disposés l'un par rapport à l'autre de telle sorte que les éléments mobiles (231, 232) du dispositif de réglage (200) sont mobiles parallèlement les uns aux autres dans le même plan que celui dans lequel les éléments de maintien (131, 132) sont mobiles linéairement le long du trajet de déplacement parallèlement les uns aux autres.

16. Procédé selon la revendication 14 ou 15, comprenant l'étape supplémentaire suivante:
d) désactiver les éléments de maintien (131, 132) de l'outillage (100) qui ne sont pas nécessaires pour la préhension des pièces planes à usiner.

17. Procédé selon l'une des revendications 14 à 16, comprenant l'étape supplémentaire suivante:
e) écarter plusieurs pièces au moyen de dispositifs disposés sur les éléments mobiles (231, 232) du dispositif de réglage (200).

18. Procédé selon l'une quelconque des revendications 14 à 17, comprenant l'étape supplémentaire suivante :
f) prendre un contour des pièces planes à usiner au moyen des éléments mobiles (231, 232) du dispositif de réglage (200).
